# EUROPÄISCHE PATENTSCHRIFT

(11) **EP 0 622 251 B1**
(45) Veröffentlichungstag und Bekanntmachung des Hinweises auf die Patenterteilung: **16.07.1997**
(21) Anmeldenummer: 94105664.0
(22) Anmeldetag: 13.04.1994
(51) Int. Cl.: B60C 7/28

(54) **Vollreifen**
Non-pneumatic tyre
Bandage non-pneumatique

(30) Priorität: 28.04.1993 DE 4313916; 28.04.1993 DE 4313917
(43) Veröffentlichungstag der Anmeldung: 02.11.1994
(73) Patentinhaber: Continental Aktiengesellschaft, 30165 Hannover (DE)
(72) Erfinder: Hoppenheit, Reinhard, Dr., D-37181 Hardegsen (DE); Pooch, Siegfried, D-34497 Korbach (DE); Backhaus, Bernd, D-34516 Buchenberg/Vöhl (DE); Salokat, Lothar, D-34396 Liebenau-Ersen (DE); Pohlmann, Robert, D-34454 Arolsen (DE); Ehlers, Klaus, D-34497 Korbach (DE)

(56) Entgegenhaltungen:
- EP-A- 0 524 002
- FR-A- 901 892
- GB-A- 841 660
- GB-A- 854 841
- GB-A- 2 051 699

## Beschreibung

Die Erfindung betrifft einen Vollreifen, der im wesentlichen aus Gummi oder gummiähnlichen Kunststoffen besteht, mit einem Laufband, einer Bodenschicht und einer Bodenschichtverstärkung aus textilen oder metallischen Festigkeitsträgern entsprechend den Merkmalen im oberbegriff von Anspruch 1 bzw. 2.

Bei bekannten Vollreifen besteht die Bodenschichtverstärkung in der Regel aus mehreren in axialer Richtung mit Abstand zueinander angeordneten Drahtpaketen oder Stahlringen, die sich mit geringem Abstand zur Bodenfläche des Vollreifens befinden. Diese Drahtpakete befinden sich in der Nähe der Bodenfläche des Vollreifens und sind von einer Bodenschicht aus zähhartem Gummi umgeben. Es sind ebenfalls Vollreifen bekannt, bei denen die Bodenschicht aus einer faserverstärkten Gummimischung bestehen. Bei der Verwendung von Drahtpaketen müssen diese bei der Konfektionierung des Reifenrohlings mühsam von Hand aufgelegt werden, was sehr zeitaufwendig ist und zu relativ großen Fertigungstoleranzen führt.

Bei einem Vollreifen nach der gattungsgemäßen EP 0 524 002 A1 wird eine Bodenschicht eingesetzt, die zum einen kein Fasermaterial enthält und die zum anderen eine Verstärkungsschicht aufweist, die zumindest eine Lage aus organischen Fasercorden enthält. Dabei können die organischen Fasercorde als Spulbandage mit konstanter Ganghöhe aufgebracht sein.

In der GB 2 051 699 A wird ein Vollreifen mit Festigkeitsträgern in der Bodenschicht beschrieben, wobei die Festigkeitsträger aus unterschiedlichen Materialien bestehen und in unterschiedlichen Winkeln zur Reifenumfangsrichtung angeordnet sein können.

Aus der GB 841 660 ist ein Vollreifen bekannt, bei dem in der Bodenschicht eine einlagige Verstärkung vorgesehen ist, die durch Wickeln eines Fadens aus Nylon, Polyester oder anderen Materialien erzeugt wird, wobei benachbarte Windungen einen konstanten Abstand zueinander haben.

Der Erfindung liegt die Aufgabe zugrunde, einen Vollreifen anzugeben, bei dem der Rohling in einem kontinuierlichen automatisierten Fertigungsablauf erstellt werden kann und der außerdem einen sicheren Sitz auf der Felge beim Gebrauch des Fertigreifens gewährleistet.

Diese Aufgabe wird erfindungsgemäß durch die kennzeichnenden Merkmale von Patentanspruch 1 gelöst gelöst.

Eine weitere Lösung dieser Aufgabe ist durch die kennzeichnenden Merkmale von Patentanspruch 2 gegeben.

Die Erfindung bietet den Vorteil eines mechanisierten Einbaus der Bodenschichtverstärkung. Dadurch erzielt man einen schnelleren Fertigungsablauf sowie erheblich geringere Fertigungstoleranzen. Schließlich verringert sich der Ausschuß.

Zur Erzeugung der Spulbandage wird in der Regel zunächst ein Teil der Bodenschicht des Vollreifens auf eine Trommel aufgebracht und danach ein Einzelfaden von einer an sich bekannten Vorrichtung mit einer einstellbaren Vorspannung auf den auf der Trommel befindlichen Teil der Bodenschicht aufgebracht, wobei der Vorschub, der die Ganghöhe der einzelnen Windungen der Spulbandage bestimmt ebenfalls einstellbar ist. Der Faden der Spulbandage kann aus einem textilen Material in Form einer Naturfaser oder einer Chemiefaser bestehen. Es kommen jedoch auch metallische Drähte bzw. Drahtseile in Frage. Der Faden bzw. Draht kann gummiert oder auch ungummiert sein. Der Faden sollte einen Durchmesser von weniger als 2 mm aufweisen. Die Spulbandage kann ein- oder mehrlagig ausgebildet sein, wobei beim Erzeugen mehrerer Lagen in einem Fertigungsablauf hin und zurück gespult wird.

In der Regel wird man die Spulbandage in der Weise in der Bodenschicht des Vollreifens anordnen, daß sie parallel zur Bodenfläche des Reifens verläuft. Dabei kann sie einen Abstand von 0 bis 25 mm zur Bodenfläche des Vollreifens einnehmen. Es kann jedoch auch zweckmäßig sein, die Spulbandage derart gewölbt im Reifenquerschnitt anzuordnen, daß sie ballig verläuft. Gemäß einer weiteren Ausbildung der Erfindung kann bei einem Vollreifen mit einer doppelt konischen Bodenfläche, die Spulbandage in der Mitte nach radial innen gewölbt verlaufen.

Nach der Erfindung ist vorgesehen, die Ganghöhe der Windungen der Spulbandage variabel zu wählen. So bietet es sich insbesondere bei einer mehrlagigen Spulbandage an, den Draht in axialer Richtung in einzelnen Zonen dichter zu wickeln als in anderen Zonen, so daß Drahtpakete entstehen, die in etwa die Wirkung der Drahtpakete in der Bodenschicht bekannter Vollreifen aufweisen, jedoch bei dem erfindungsgemäßen Verfahren viel regelmäßiger gewickelt und angeordnet sind.

Bei Verwendung eines Materialstreifens besteht der Materialstreifen der Spulbandage aus 2 bis 20 nebeneinander in Cordlage angeordneten Einzelfäden, die mit einer Gummierungsschicht umgeben sind, so daß der Streifen zusammen gehalten wird und sich im Vollreifen besser mit den benachbarten Gummischichten verbindet. Der Streifen kann ca. 3 bis 30 mm breit sein. Der Faden der Spulbandage kann aus einem textilen Material in Form einer Naturfaser oder einer Chemiefaser bestehen. Es kommen jedoch auch metallische Drähte bzw. Drahtseile in Frage. Der Faden sollte einen Durchmesser von weniger 2 mm aufweisen.

Zur Erzeugung der Spulbandage wird in der Regel zunächst ein Teil der Bodenschicht des Vollreifens auf eine Trommel aufgebracht und danach das Streifenmaterial von einer an sich bekannten Vorrichtung mit einer einstellbaren Vorspannung abgezogen und auf den auf der Trommel befindlichen Teil der Bodenschicht aufgebracht, wobei der Vorschub, der die Ganghöhe der einzelnen Windungen der Spulbandage bestimmt, ebenfalls einstellbar ist. Die Spulbandage kann ein- oder mehrlagig ausgebildet sein, wobei beim Erzeugen mehrerer Lagen in einem Fertigungsablauf hin und zurück gespult wird.

In der Regel wird man die Spulbandage in der Weise in der Bodenschicht des Vollreifens anordnen, daß sie parallel zur Bodenfläche des Reifens verläuft. Dabei kann sie einen Abstand von 0 bis 25 mm zur Bodenfläche des Vollreifens einnehmen.

Nach der Erfindung ist vorgesehen, die Ganghöhe der Windungen der Spulbandage variabel zu wählen. So bietet es sich insbesondere an, in den axial äußeren Bereichen des Vollreifens überlappend zu wickeln und im Mittelbereich die Windungen dicht an dicht oder mit Abstand zueinander zu legen. Aufgrund der automatisierten Einstellbarkeit von Vorspannung und Ganghöhe für das Streifenmaterial der Spulbandage erhält man einen Reifen mit einer sehr hohen Fertigungsgenauigkeit.

Nachfolgend werden mehrere Ausführungsbeispiele der Erfindung anhand einer Zeichnung näher erläutert.

Es zeigt
- Figur 1: einen Vollreifen mit einer Bodenschichtverstärkung in Form einer einlagigen Spulbandage,
- Figur 2: die Spulbandage in einer perspektivischen Ansicht,
- Figur 3: einen Vollreifen mit einer dreilagigen Spulbandage,
- Figur 4: einen Vollreifen mit doppelt konischer Bodenfläche und einer in der Mitte nach radial innen gewölbten Spulbandage,
- Figur 5: einen Vollreifen mit doppelt konischer Bodenfläche und einer Spulbandage parallel zur Bodenfläche,
- Figur 6: einen Vollreifen mit einer zylindrischen Bodenfläche und einer balligen Spulbandage,
- Figur 7: einen Vollreifen mit einer gestuften Bodenfläche und einer Spulbandage parallel zur Bodenfläche,
- Figur 8: einen Vollreifen mit einer gestuften Bodenfläche und einer dreilagigen Spulbandage mit variabler Ganghöhe der Windungen.
- Figur 9: einen Vollreifen mit einer Bodenschichtverstärkung in Form einer einlagigen Spulbandage mit dicht an dicht liegenden Windungen.
- Figur10: einen Vollreifen mit einer dreilagigen Spulbandage,
- Figur11: einen Vollreifen mit einer einlagigen Spulbandage in Form von sich überlappenden Streifen,
- Figur12: einen Vollreifen mit einer einlagigen Spulbandage, deren streifen sich in den Randbereichen des Reifens überlappen.

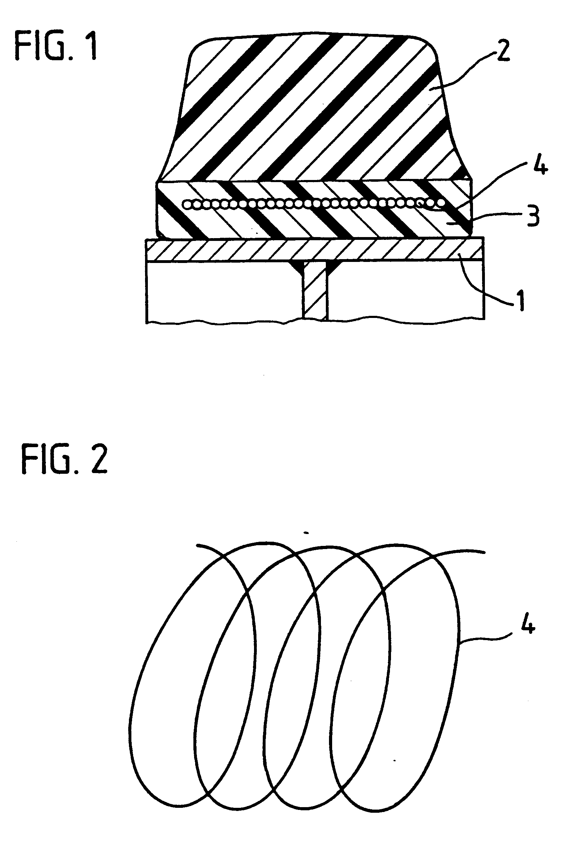

Der Vollreifen der Figur 1 befindet sich auf einer zylindrischen Felge 1 und besteht im wesentlichen aus einem Laufband 2 und einer Bodenschicht 3. Die Bodenschicht 3 besteht aus einem sehr zähharten Gummi, während der Gummi des Laufbandes 2 elastischer eingestellt ist und darüber hinaus sehr verschleißfest gewählt ist.

In der Bodenschicht 3 befindet sich eine Bodenschichtverstärkung in Form einer einlagigen Spulbandage 4, die aus einem Einzelfaden bzw. einem Einzeldraht bzw. einem Einzelseil erzeugt ist. Die Spulbandage 4 nimmt in axialer Richtung zumindest 80 % der Breite der Bodenfläche des Vollreifens ein. Bei schmaleren Vollreifen kann es genügen, wenn die Spulbandage 4 zumindest 20 % der Breite der Bodenfläche einnimmt; bevorzugt erstreckt sie sich jedoch zumindest über die halbe axiale Breite.

Zur Erzeugung des Vollreifenrohlings wird zunächst ein Teil der Bodenschicht 3 auf eine Wickeltrommel aufgelegt. Danach wird die Spulbandage durch Abziehen eines Einzelfadens von einer Abspulvorrichtung und Aufbringen auf die Trommel erzeugt, wobei die Vorspannung und der Vorschub eingestellt werden können, so daß sich reproduzierbare Reifenrohlinge mit exakt gleichen Eigenschaften ergeben. Nachdem die Spulbandage 4 aufgebracht ist, wird der Rest der Bodenschicht 3 aufgelegt und danach der Rohling durch Aufbringen des Laufbandes 2 vervollständigt.

Figur 2 zeigt in einer perspektivischen Darstellung den Verlauf der Spulbandage 4.

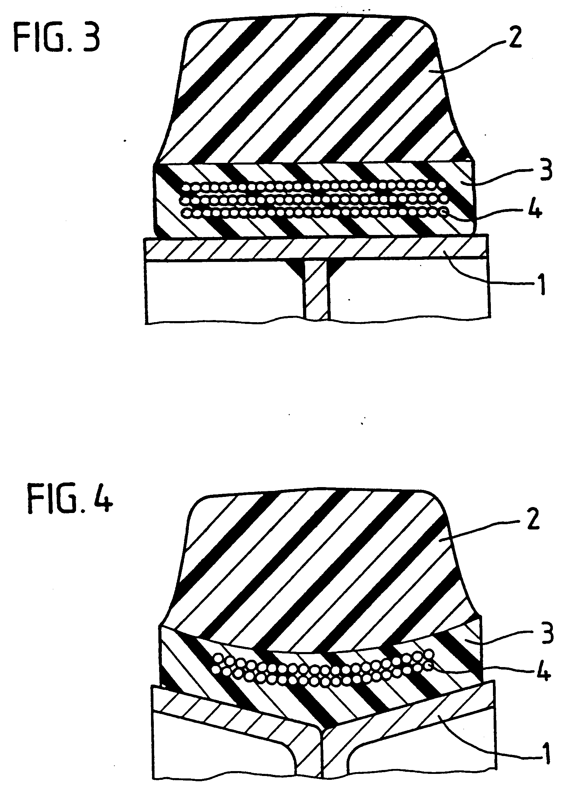

Das Beispiel der Figur 3 unterscheidet sich von dem der Figur 1 dadurch, daß die Spulbandage 4 nunmehr dreilagig ausgebildet ist. Die Erzeugung dieser Spulbandage 4 erfolgt in einem Arbeitsgang, wobei nach dem Wickeln der unteren Lage unmittelbar zurückgewickelt wird und zur Erzeugung der dritten Lage wiederum in der ersten Richtung gewickelt wird.

Beim Beispiel der Figur 4 befindet sich der Vollreifen auf einer doppelt konischen Felge 1 und besteht wiederum aus einem Laufband 2 und einer Bodenschicht 3 mit einer darin angeordneten Bodenschichtverstärkung. Die Bodenschichtverstärkung besteht aus einer zweilagigen Spulbandage 4, die mit Abstand zur Bodenfläche des Vollreifens angeordnet ist und in der Mitte nach radial innen gewölbt verläuft.

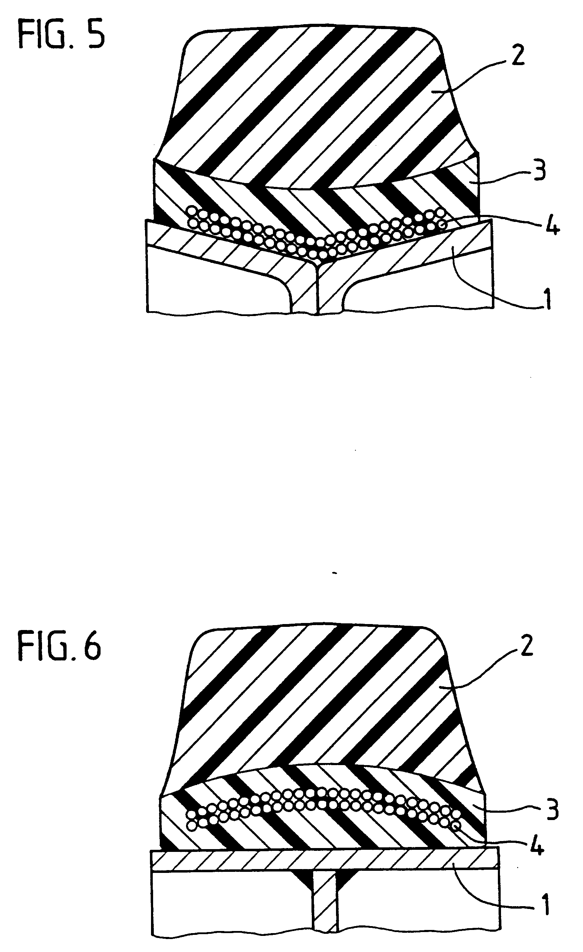

Im Beispiel der Figur 5 ist der Vollreifen wiederum auf einer doppelt konischen Felge 1 angeordnet und die Bodenschichtverstärkung liegt in Form einer zweilagigen Spulbandage 4 vor. In diesem Fall ist die Spulbandage 4 ohne Abstand zur Bodenfläche des Vollreifens angeordnet und verläuft parallel zur Bodenfläche, so daß sie im Reifenquerschnitt ebenfalls eine doppelt konische Form annimmt. Der Vollreifen ist wiederum aus einem Laufband 2 und einer Bodenschicht 3 aufgebaut.

Beim Beispiel der Figur 6 befindet sich ein Vollreifen auf einer zylindrischen Felge 1, wobei der Vollreifen aus einem Laufband 2 und einer Bodenschicht 3 besteht. In der Bodenschicht 3 befindet sich eine zweilagige Spulbandage 4, die sich im wesentlichen über die gesamte Breite der Bodenschicht 3 erstreckt und ballig ausgebildet ist.

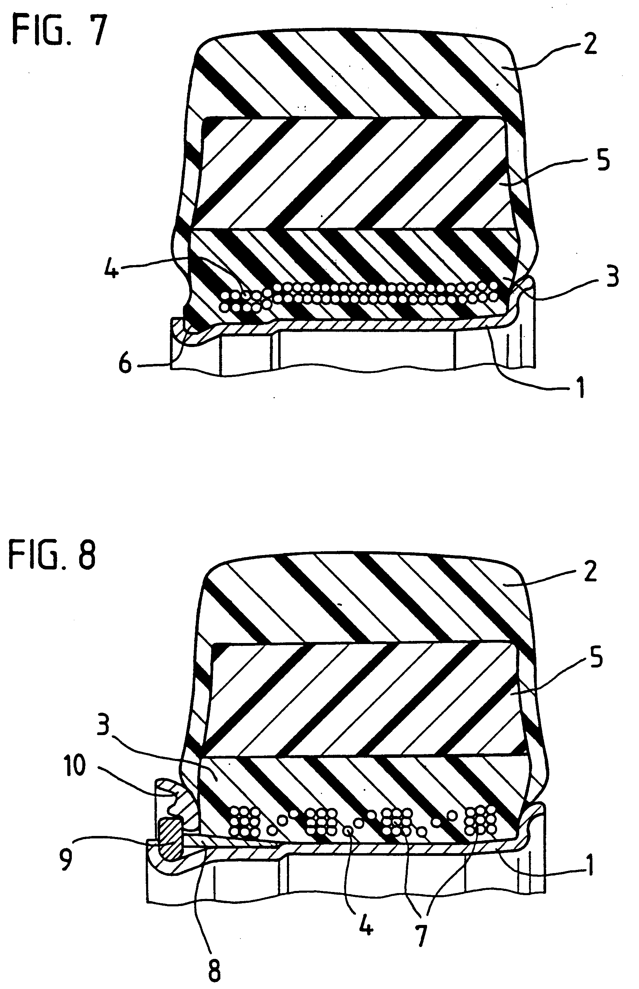

Im Beispiel der Figur 7 besteht der Vollreifen aus einem Laufband 2 und einer Bodenschicht 3 sowie einem Zwischenbau 5. Durch diese Dreiteilung erhält man einen Vollreifen mit extrem hohen Komfort und großer Verschleißfestigkeit, weil das Laufband 2 aus einem extrem verschleißfesten Gummi gewählt ist, während der Zwischenbau 5 aus einem hochelastischen Gummi besteht. Der Gummi des Laufbandes 2 umschließt den Zwischenbau 5 sowie Teile der Bodenschicht 3. Die Bodenschicht 3 besteht wiederum aus einem zähharten Gummi. Der Vollreifen weist eine gestufte Bodenfläche auf, die sich der Kontur der gestuften Felge anpaßt. Eine Nase 6 greift in eine Rille der Felge 1, so daß ein sicherer Sitz auf der Felge gewährleistet ist. In der Bodenschicht 3 befindet sich eine zweilagige Spulbandage 4, die mit Abstand zur Bodenfläche parallel zu dieser verläuft. Die Spulbandage beginnt seitlich von der Nase 6 und endet im wesentlichen am anderen Ende der Bodenschicht 3.

Figur 8 zeigt einen Vollreifen, dessen Gummibestandteile im wesentlichen dem Beispiel der Figur 7 entsprechen. In der Bodenschicht befindet sich nunmehr eine dreilagige Spulbandage 4, bei der der Faden bzw. Draht in axialer Richtung in einzelnen Zonen dichter gewickelt ist als in anderen Zonen, so daß vier Faden- bzw. Drahtpakete 7 entstehen. Auch diese Spulbandage 4 läßt sich in einem einzigen Arbeitsgang erzeugen. Der Vollreifen befindet sich auf der Felge 1, die mehrteilig ausgebildet ist. Für einen sicheren Sitz des Reifens sorgen ein Schrägschulterring 8, ein Seitenring bzw. Felgenhornring 9 sowie ein Verschlußring 10.

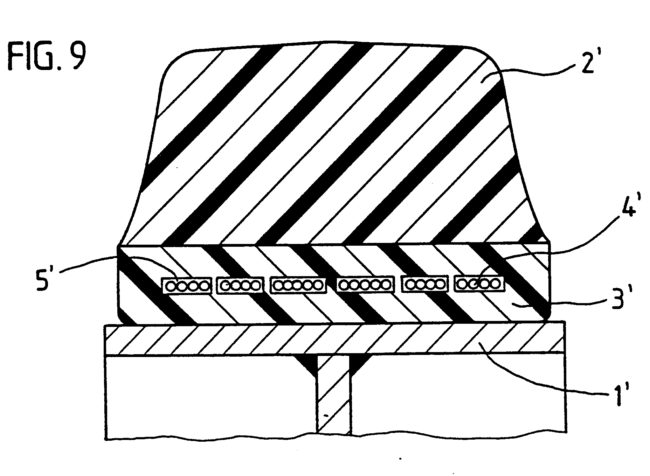

Der Vollreifen der Figur 9 befindet sich auf einer zylindrischen Felge 1' und besteht im wesentlichen aus einem Laufband 2' und einer Bodenschicht 3'. Die Bodenschicht 3' wird aus einem sehr zähharten Gummi gebildet, während der Gummi des Laufbandes 2' elastischer eingestellt ist und darüber hinaus äußerst verschleißfest gewählt ist.

In der Bodenschicht 3' befindet sich eine Bodenschichtverstärkung in Form einer einlagigen Spulbandage 4' aus einem Materialstreifen 5', der in Windungen dicht an dicht oder mit geringfügigem Abstand zueinander verlegt ist. Die Spulbandage 4' nimmt in axialer Richtung zumindest 80 % der Breite der Bodenfläche des Vollreifens ein. Bei schmalen Vollreifen kann es genügen, wenn die Spulbandage 4' zumindest 20 % der Breite der Bodenfläche einnimmt; bevorzugt erstreckt sie sich jedoch zumindest über die halbe axiale Breite. Zur Erzeugung des Vollreifenrohlings wird zunächst ein Teil der Bodenschicht 3' auf eine Wickeltrommel aufgelegt. Danach wird die Spulbandage 4' durch Abziehen des Streifenmaterials 5' von einer Abspulvorrichtung und Aufbringen auf die Trommel erzeugt, wobei die Vorspannung und der Vorschub sehr genau eingestellt werden können, so daß sich reproduzierbare Reifenrohlinge mit exakt gleichen Eigenschaften ergeben. Nachdem die Spulbandage 4' aufgebracht ist, wird der Rest der Bodenschicht 3' aufgelegt und danach der Rohling durch Aufbringen des Laufbandes 2' vervollständigt.

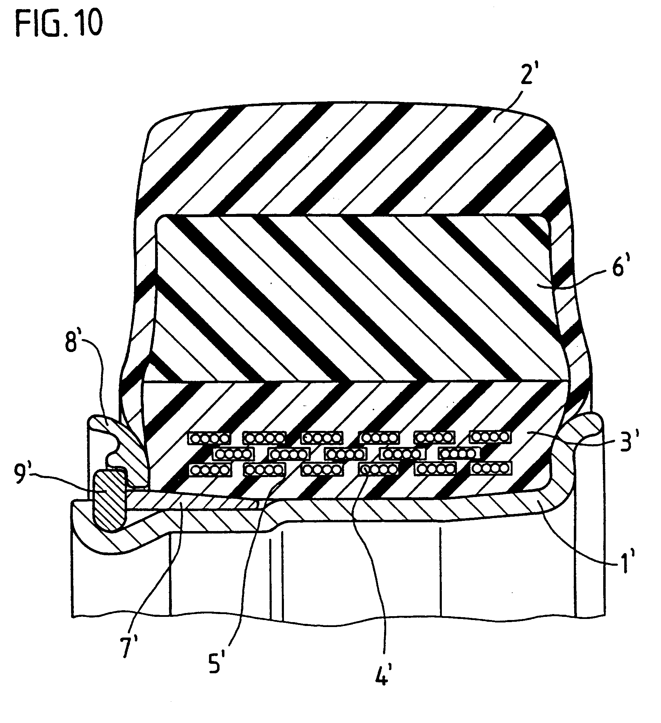

Figur 10 zeigt einen anderen Typ eines Vollreifens mit einem Laufband 2' und einer Bodenschicht 3', in der sich wiederum eine Bodenverstärkung befindet. Zwischen dem Laufband 2' und der Bodenschicht 3' liegt ein Zwischenbau 6' sowie Teile der Bodenschicht 3'. Die Bodenschicht 3' besteht wiederum aus einem zähharten Gummi. Der Vollreifen befindet sich auf einer Felge 1', die mehrteilig ausgebildet ist. Für einen sicheren Sitz des Reifens auf der Felge 1' sorgen eine Schrägschulterring 7', ein Seitenring bzw. Felgenhornring 8' sowie ein Verschlußring 9'. In der Bodenschicht 3' befindet sich eine dreilagige Spulbandage 4' mit geringfügig beanstandeten Windungen des Streifenmaterials 5', die in einem einzigen Arbeitsgang durch Hin- und Zurückspulen erzeugt ist. Die Windungen können bei Bedarf jedoch auch dicht and dicht liegen. Die Spulbandage 4' liegt mit Abstand zur Bodenfläche des Vollreifens in der Bodenschicht 3' und verläuft im wesentlichen parallel zur Bodenfläche.

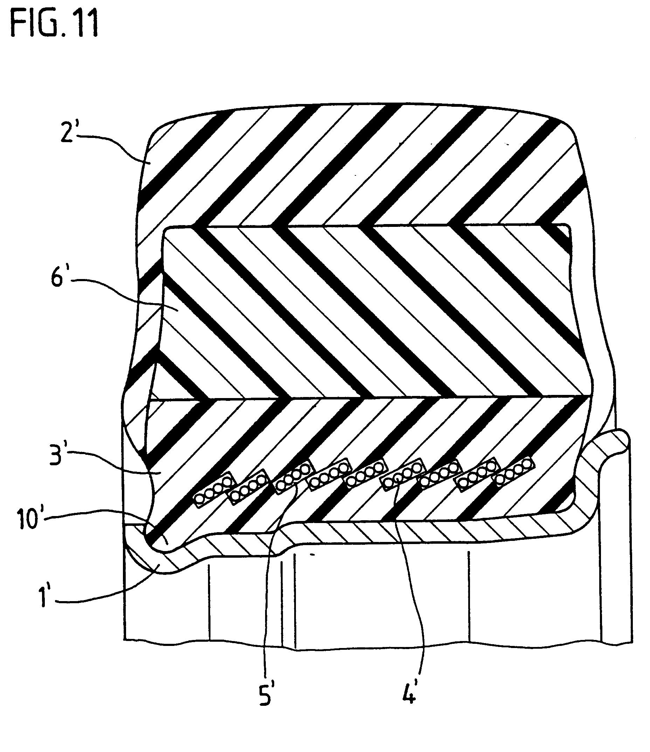

Im Beispiel der Figur 11 entspricht der Vollreifen in seinem Aufbau im wesentlichen der Figur 10, weist jedoch zusätzlich eine Montagenase 10' auf, die in eine Rille der Felge 1' eingreift, so daß der Reifen auf einer einteiligen Felge montierbar ist. Die einlagige Spulbandage 4' ist in diesem Fall derart gewickelt, daß sich benachbarte Windungen des Streifenmaterials 5' überlappen und zwar insbesondere hälftig überlappen. Die Spulbandage 4' verläuft wiederum parallel zur Bodenfläche des Vollreifens und liegt mit Abstand zu ihr in der Bodenschicht 3'.

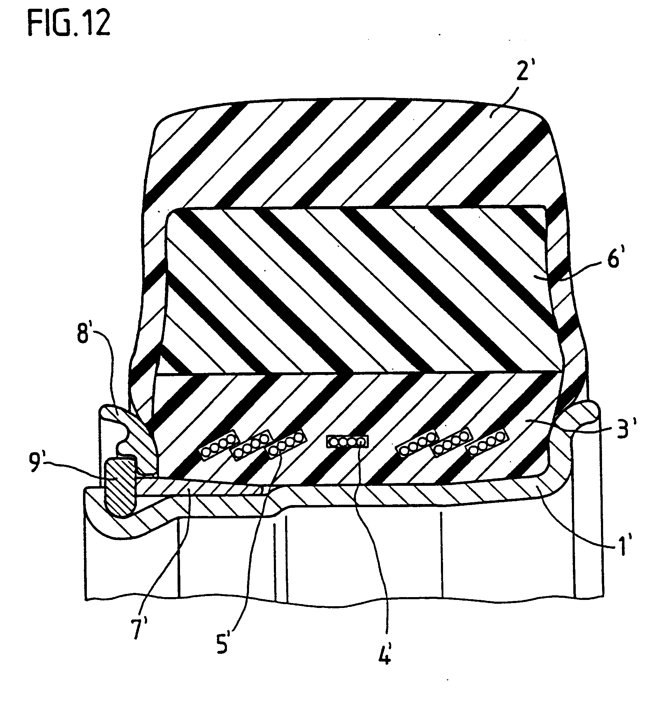

Beim Vollreifen der Figur 12 liegt in der Bodenschicht 3' wiederum eine einlagige Spulbandage 4' mit sich überlappenden Windungen. In diesem Beispiel befinden sich die sich überlappenden Spulbandagenbereiche in den axial äußeren Bereichen des Vollreifens, während der Mittenbereich durch eine oder zwei Windungen überbrückt ist, so daß die gesamte Spulbandage wiederum in einem einzigen Fertigungsschritt hergestellt werden kann. Bei Bedarf kann der Mittenbereich auch in der Weise ausgebildet sein, daß dort die Windungen dicht an dicht gelegt werden.

## Patentansprüche

1. Vollreifen, der im wesentlichen aus Gummi oder gummiähnlichen Kunststoffen besteht, mit einem Laufband (2), einer Bodenschicht (3) und einer Bodenschichtverstärkung aus textilen oder metallischen Festigkeitsträgern, wobei die Bodenschichtverstärkung aus einer zumindest einlagigen Spulbandage (4) besteht, die durch Wickeln eines Einzelfadens oder -drahtes bzw. -seils in zahlreichen Windungen erzeugt ist und sich zumindest über 20 % der axialen Breite der Bodenschicht (3) erstreckt, **dadurch gekennzeichnet**, daß die Ganghöhe der Windungen der Spulbandage (4) variabel ist.

2. Vollreifen, der im wesentlichen aus Gummi oder gummiähnlichen Kunststoffen besteht, mit einem Laufband (2'), einer Bodenschiche (3') und einer Bodenschichtverstärkung aus textilen oder metallischen Festigkeitsträgern, wobei die Bodenschichtverstärkung aus einer zumindest einlagigen Spulbandage (4') besteht, die durch Wickeln eines Materialstreifens (5') aus mehreren in Cordlage angeordneten Fäden oder Drähten bzw. Seilen in mehreren Windunden erzeugt ist und sich zumindest über 20 % der axialen Breite der Bodenschicht (3') erstreckt, dadurch gekennzeichnet, daß die Ganghöhe der Windungen der Spulbandage (4') variabel ist.

3. Vollreifen nach Anspruch 1 oder 2, dadurch gekennzeichnet, daß die Spulbandage (4,4') aus einer Naturfaser oder Chemiefaser besteht.

4. Vollreifen nach Anspruch 1 oder 2, dadurch gekennzeichnet, daß der Einzelfaden oder Draht einen Durchmesser von weniger als 2 mm aufweist.

5. Vollreifen nach Anspruch 1 oder 2, dadurch gekennzeichnet, daß jede Lage der Spulbandage (4,4') parallel zur Bodenfläche (3,3') des Reifens verläuft.

6. Vollreifen nach Anspruch 2, dadurch gekennzeichnet, daß die Fäden bzw. Drähte des Materialstreifens (5') mit einer Gummierungsschicht ummantelt sind.

7. Vollreifen nach Anspruch 1 oder 2, dadurch gekennzeichnet, daß die radial innere Lage der Spulbandage (4,4') einen Abstand von 0 bis 25 mm zur Bodenfläche des Reifens aufweist.

8. Vollreifen nach Anspruch 1, dadurch gekennzeichnet, daß die Spulbandage (4, 4') mehrlagig ausgebildet ist und daß in axialer Richtung in einzelnen Zonen der Faden bzw. Draht dichter gewickelt ist, so daß Faden- bzw. Drahtpakete (7,7') vorhanden sind.

9. Vollreifen nach Anspruch 1, dadurch gekennzeichnet, daß die Bodenfläche doppelt konisch ausgebildet ist und daß die Spulbandage (4,4') der Mitte nach radial innen gewölbt verläuft.

10. Vollreifen nach Anspruch 2, dadurch gekennzeichnet, daß die Fäden bzw. Drähte des Materialstreifens (5') mit einer Gummierungsschicht ummantelt sind.

11. Vollreifen nach Anspruch 2, dadurch gekennzeichnet, daß die Spulbandage (4') einlagig mit dicht an dicht oder mit geringfügigem Abstand zueinander angeordneten Windungen ausgebildet sind.

12. Vollreifen nach Anspruch 2, dadurch gekennzeichnet, daß die Materialstreifen (5') in den einzelnen Windungen der Spulbandage (4') überlappend angeordnet sind.

13. Vollreifen nach Anspruch 2, dadurch gekennzeichnet, daß die Spulbandage (4') in den axial äußeren Bereichen des Vollreifens überlappend und im Mittenbereich dicht bei dicht oder mit Abstand zueinander gewickelt ist.

14. Verfahren zur Herstellung eines Vollreifens nach Anspruch 1 oder 2, dadurch gekennzeichnet, daß gegebenenfalls zunächst ein Teil einer Bodenschicht (3,3') des Vollreifens auf eine Wickeltrommel aufgelegt wird, daß danach eine ein- oder mehrlagige Spulbandage (4, 4') durch Wickeln eines Einzelfadens oder -drahtes oder -seils bzw. eines Materialstreifens (5') in nebeneinanderliegenden Windungen mit variabler Ganghöhe erzeugt wird, daß anschließend die Bodenschicht (3, 3') vervollständigt wird und die übrigen Teile des Rohlings aufgelegt werden.

## Claims

1. Solid tyre, which is substantially formed from rubber or rubber-like plastics materials, having a tread strip (2), a bottom layer (3) and a bottom layer reinforcement formed from textile or metallic reinforcing members, the bottom layer reinforcement comprising a wound bandage (4) which is at least single-layered, said bandage being produced by winding a single filament or wire or respectively rope in numerous windings, and said bandage extending over at least 20 % of the axial width of the bottom layer (3), characterised in that the pitch of the windings of the wound bandage (4) is variable.

2. Solid tyre, which is substantially formed from rubber or rubber-like plastics materials, having a tread strip (2'), a bottom layer (3') and a bottom layer reinforcement formed from textile or metallic reinforcing members, the bottom layer reinforcement comprising a wound bandage (4') which is at least single-layered, said bandage being produced by winding a strip of material (5'), formed from a plurality of filaments or wires or respectively ropes disposed in a cord ply, in a plurality of windings, and said bandage extending over at least 20 % of the axial width of the bottom layer (3'), characterised in that the pitch of the windings of the wound bandage (4') is variable.

3. Solid tyre according to claim 1 or 2, characterised in that the wound bandage (4,4') is formed from a natural fibre or a chemical fibre.

4. Solid tyre according to claim 1 or 2, characterised in that the single filament or wire has a diameter of less than 2 mm.

5. Solid tyre according to claim 1 or 2, characterised in that each ply of the wound bandage (4,4') extends parallel to the bottom surface (3,3') of the tyre.

6. Solid tyre according to claim 2, characterised in that the filaments or respectively wires of the strip of material (5') are covered with a rubber coating layer.

7. Solid tyre according to claim 1 or 2, characterised in that the radially inner ply of the wound bandage (4,4') has a spacing of between 0 and 25 mm from the bottom surface of the tyre.

8. Solid tyre according to claim 1, characterised in that the wound bandage (4,4') has a multiple-layered construction, and in that the filament or respectively wire is wound more tightly in the axial direction in individual zones, so that bundles of filaments or respectively wires (7,7') are formed.

9. Solid tyre according to claim 1, characterised in that the bottom surface has a double-conical configuration, and in that the wound bandage (4,4') extends towards the centre in a radially inwardly curved manner.

10. Solid tyre according to claim 2, characterised in that the filaments or respectively wires of the strip of material (5') are covered with a rubber coating layer.

11. Solid tyre according to claim 2, characterised in that the wound bandage (4') has a single-layered configuration with windings which are disposed close together or at a slight spacing from one another.

12. Solid tyre according to claim 2, characterised in that the strip of material (5') is overlappingly disposed in the individual windings of the wound bandage (4').

13. Solid tyre according to claim 2, characterised in that the wound bandage (4') is wound so that the windings overlap in the axially outer regions of the solid tyre and are close up to one another in the central region or with a spacing from one another.

14. Method of producing a solid tyre according to claim 1 or 2, characterised in that, if necessary, a portion of a bottom layer (3,3') of the solid tyre is initially placed upon a winding drum, in that a single- or multiple-layered wound bandage (4,4') is then produced by winding a single filament or wire or rope or respectively a strip of material (5') in adjacent windings with a variable pitch, in that subsequently the bottom layer (3,3') is completed and the remaining portions of the blank are applied.

## Revendications

1. Bandage plein, qui consiste essentiellement en caoutchouc ou en matières plastiques analogues à du caoutchouc, comprenant une bande de roulement (2), une couche de fond (3) et une armature de la couche de fond formée de supports résistants textiles ou métalliques, l'armature de la couche de fond consistant en une frette bobinée (4) en au moins une couche qui est produite par enroulement d'une fibre ou d'un fil métallique individuel ou d'un câble en de multiples spires et qui est disposée sur au moins 20% de la largeur axiale de la couche de fond (3), caractérisé en ce que le pas des spires de la frette bobinée (4) est variable.

2. Bandage plein, qui consiste essentiellement en caoutchouc ou en matières plastiques analogues à du caoutchouc, comprenant une bande de roulement (2'), une couche de fond (3') et une armature de la couche de fond formée de supports résistants textiles ou métalliques, l'armature de la couche de fond consistant en une frette bobinée (4') en au moins une couche qui est produite par enroulement en plusieurs spires d'une bande de matière (5') constituée de plusieurs fibres ou fils ou câbles métalliques disposés en couches de cordes et qui couvre au moins 20% de la largeur axiale de la couche de fond (3'), caractérisé en ce que le pas des spires de la frette bobinée (4') est variable.

3. Bandage plein selon la revendication 1 ou 2, caractérisé en ce que la frette bobinée (4, 4') consiste en fibres naturelles ou en fibres chimiques.

4. Bandage plein selon la revendication 1 ou 2, caractérisé en ce que la fibre individuelle ou le fil métallique a un diamètre inférieur à 2 mm.

5. Bandage plein selon la revendication 1 ou 2, caractérisé en ce que chaque couche de la frette bobinée (4, 4') est parallèle à la surface du fond (3, 3') du bandage.

6. Bandage plein selon la revendication 2, caractérisé en ce que les fibres ou fils métalliques de la bande de matière (5') sont enveloppés d'une couche de caoutchoutage.

7. Bandage plein selon la revendication 1 ou 2, caractérisé en ce que la position radialement intérieure de la frette bobinée (4, 4') est à une distance de 0 à 25 mm de la surface du fond du bandage.

8. Bandage plein selon la revendication 1, caractérisé en ce que la frette bobinée (4, 4') est en plusieurs couches et en ce qu'elle est enroulée en direction axiale avec une plus grande densité dans des zones individuel les des fibres ou des fils métalliques de manière que des paquets de fibres ou de fils métalliques (7, 7') soient présents.

9. Bandage plein selon la revendication 1, caractérisé en ce que la surface de fond a une forme conique double et en ce que la frette bobinée (4, 4') est incurvée au milieu radialement vers l'intérieur.

10. Bandage plein selon la revendication 2, caractérisé en ce que les fibres ou fils métalliques de la bande de matière (5') sont enveloppés d'une couche de caoutchoutage.

11. Bandage plein selon la revendication 2, caractérisé en ce que la frette bobinée (4') est en une couche de spires disposées côte à côte ou à faible distance les unes des autres.

12. Bandage plein selon la revendication 2, caractérisé en ce que les bandes de matière (5') sont disposées à chevauchement dans les spires individuelles de la frette bobinée (4').

13. Bandage plein selon la revendication 2, caractérisé en ce que la frette bobinée (4') est enroulée à chevauchement dans les parties axialement extérieures du bandage et, dans la zone centrale, côte à côte ou à distance.

14. Procédé de réalisation d'un bandage plein selon la revendication 1 ou 2, caractérisé en ce que, le cas échéant, tout d'abord une partie d'une couche de fond (3, 3') du bandage plein est posée sur un tambour d'enroulement, en ce qu'ensuite une frette bobinée en une ou plusieurs couches (4, 4') est produite par enroulement d'une fibre ou d'un fil métallique ou d'un câble métallique individuel ou encore d'une bande de matière (5') en spires juxtaposées à pas variable, en ce qu'ensuite la couche de fond (3, 3') est achevée et les autres parties de l'ébauche sont posées.
